# EUROPÄISCHE PATENTANMELDUNG

(11) **EP 4 699 667 A1**
(43) Veröffentlichungstag der Anmeldung: **25.02.2026**
(21) Anmeldenummer: 25194281.9
(22) Anmeldetag: 06.08.2025
(51) Int. Cl.: A62C 3/00, B65D 88/12, B65D 90/06

(54) **STAPELLAGERANORDNUNG UND BEHÄLTERDECKEL HIERFÜR**

(30) Priorität: 12.08.2024 DE 102024122932
(71) Anmelder: Jungheinrich AG, 22047 Hamburg (DE)
(72) Erfinder: Becker, Michael, 63512 Hainburg (DE); Gerhardt, Marc, 36088 Hünfeld (DE); Cavelius, Jörg, 61118 Bad Vilbel (DE); Liebhaber, Markus, 61440 Oberursel (DE)
(74) Vertreter: Keil & Schaafhausen Patentanwälte PartGmbB

(57) **Zusammenfassung**

Die vorliegende Erfindung betrifft eine Stapellageranordnung (1) mit mehreren Behälteraufnahmeräumen (2) zur Aufnahme von Stapeln von Behältern (10).

Es ist Aufgabe der vorliegenden Erfindung, eine Stapellageranordnung (1) bereit zu stellen, die gute Effizienz bei einer Brandbekämpfung aufweist.

Die Aufgabe wird durch eine Stapellageranordnung (1) mit einen Behälterdeckel (9) gelöst, bei dem in jedem Eckbereich (11a - 11d) eine Erhöhung (13a - 13d, 17) vorgesehen ist, die Teil einer Flüssigkeitsführung ist.

## Beschreibung

Die vorliegende Erfindung betrifft eine Stapellageranordnung mit mehreren Behälteraufnahmeräumen, die in mehreren Reihen und Spalten angeordnet sind und zur Aufnahme von Stapeln von Behältern ausgebildet sind.

Weiterhin betrifft die Erfindung einen Behälterdeckel für eine Stapellageranordnung mit mehreren Behälteraufnahmeräumen zur Aufnahme von Stapeln von Behältern.

Eine Stapellageranordnung, auch Blocklageranordnung oder Behälterstapelanordnung genannt, ist ein Lagersystem, in dem Stapel von Behältern gelagert werden, die bspw. zur Aufnahme von Waren dienen. Dazu weist die Stapellageranordnung Behälteraufnahmeräume auf, die in Reihen und Spalten angeordnet sind. Die Behälteraufnahmeräume werden durch einen Beschickungsraum, der in Schwerkraftrichtung oberhalb oder unterhalb der Behälteraufnahmeräume angeordnet ist, mit Behältern beschickt bzw. es werden Behälter aus den Behälteraufnahmeraum durch den Beschickungsraum entnommen. Eine solche Stapellageranordnung ist aus der EP 3 782 931 A1 bekannt. Hierbei ist der Beschickungsraum unterhalb der Behälteraufnahmeräume angeordnet.

Bei einem Einlagerungsvorgang wird ein Behälter durch ein Beschickungsfahrzeug in einer Ein- und Auslagerstation aufgenommen und in den Beschickungsraum überführt. Dort positioniert sich das Beschickungsfahrzeug unterhalb eines Behälterstapelraumes und führt den Behälter von unten in den Behälterstapelraum ein. Dazu hebt das Beschickungsfahrzeug den Behälter entgegen der Schwerkraftrichtung an, bis der Behälter eine Halteeinrichtung, die in einer Freigabeposition ist, passiert hat. Anschließend wird die Halteeinrichtung in eine Halteposition überführt und der Behälter auf die Halteeinrichtung abgesenkt. Wenn der Behälter in einen Behälteraufnahmeraum eingelagert werden soll, in dem bereits ein Behälter oder mehrere Behälter in Form eines Stapels angeordnet sind, hebt das Beschickungsfahrzeug den einzulagernden Behälter an, bis dieser in Kontakt mit dem untersten Behälter des Stapels ist. Anschließend werden der einzulagernde Behälter und der Stapel weiter angehoben, bis der einzulagernde Behälter an der Halteeinrichtung vorbei ist, sodass der komplette Stapel auf die Halteeinrichtung abgesenkt werden kann. Nun ist der einzulagernde Behälter eingelagert und ist der neue unterste Behälter des Stapels.

Bei einem Auslagerungsvorgang positioniert sich das Beschickungsfahrzeug unter einem Behälterstapelraum, dessen unterster Behälter ausgelagert werden soll. Das Beschickungsfahrzeug hebt den Stapel von Behältern (Behälterstapel) an, sodass die Halteeinrichtung von der Halteposition in die Freigabeposition überführt werden kann. Anschließend senkt das Beschickungsfahrzeug den Stapel ab, sodass der auszulagernde Behälter die Halteeinrichtung passieren kann. In der Zwischenzeit wird die Halteeinrichtung von der Freigabeposition in die Halteposition überführt, sodass die Halteeinrichtung den nächstoberhalb des auszulagernden Behälters angeordneten Behälter halten und der auszulagernde Behälter von dem verbleibenden Stapel getrennt aus dem Behälterstapelraum entnommen werden kann.

Soll ein Behälter ausgelagert werden, der nicht der unterste Behälter eines Stapels ist, werden so lange Behälter von dem entsprechenden Behälterstapelraum in einen anderen Behälterstapelraum überführt, bis der auszulagernde Behälter der unterste Behälter ist und entnommen werden kann.

Durch die Lagerung der Behälter in Form von Stapeln kann eine sehr hohe Packungsdichte erreicht werden. Entsprechend sind viele Behälter auf kleinem Raum angeordnet. Sollte in einem Behälter Feuer ausbrechen, weil beispielsweise eine defekte Batterie in diesem Behälter gelagert wird, kann das Feuer schnell auf andere Behälter überspringen und sich schnell zu einem schwer zu kontrollierenden Brand entwickeln. Bereits nach wenigen Minuten kann ein Brand nur noch schwer oder nicht mehr kontrollierbar sein.

Entsprechend werden präventive Maßnahmen und/oder Brandbekämpfungsmaßnahmen getroffen. Zu den präventiven Maßnahmen zählt beispielsweise die Reduktion des Luftsauerstoffs innerhalb der Stapellageranordnung. Eine solche sauerstoffreduzierte Atmosphäre ist aus der EP 4 238 902 A1 bekannt. Dazu weist die Stapellageranordnung eine Hülle auf, die eine äußere Atmosphäre von einer inneren Atmosphäre trennt. Sollte innerhalb der Hülle mit der sauerstoffreduzierten Atmosphäre eine Wartungsarbeit anfallen, die menschliches Handeln erfordert, muss die Atmosphäre mit Sauerstoff angereichert werden, sodass ein Mensch ohne Gefahr innerhalb der Stapellageranordnung arbeiten kann.

Eine Brandbekämpfungsmaßnahme ist beispielsweise eine Sprinkleranlage, die Wasser versprüht, sobald sie aktiviert wurde. Die Sprinkleranlage weist mehrere Sprinkler auf, wobei jeder Sprinkler ungefähr die Fläche von 25 Behälteraufnahmeräumen mit Wasser besprüht. Im Normalfall ist in jedem Behälteraufnahmeraum ein Behälterstapel vorgesehen, dessen oberster Behälter nach oben hin geöffnet ist. Dadurch wird ein Teil des von der Sprinkleranlage versprühten Wassers durch den obersten Behälter eines jeden Stapel aufgefangen, das bei der Brandbekämpfung fehlt. Erst wenn der oberste Behälter voll mit Wasser ist und weiteres Wasser aus dem Behälter überläuft, gelangt Wasser zum Brandherd. Dadurch vergeht wertvolle Zeit, in der sich der Brand ausbreiten kann.

Es ist Aufgabe der vorliegenden Erfindung, die Brandbekämpfung in einer Stapellageranordnung zu verbessern.

Diese Aufgabe wird durch die Merkmale des Anspruchs 1 gelöst.

Dazu ist in jedem Behälteraufnahmeraum ein Behälterdeckel, insbesondere genau ein Behälterdeckel angeordnet, wobei der Behälterdeckel wenigstens einen First aufweist. Wenn ein Behälter in dem Behälteraufnahmeraum angeordnet ist, liegt der Behälterdeckel auf dem (obersten) Behälter auf, ansonsten liegt der Behälterdeckel auf einer Halteeinrichtung auf. Dadurch wird das Behälterinnere des obersten Behälters durch den Behälterdeckel bedeckt, sodass das Behälterinnere gegen Schmutz geschützt ist. Weiterhin verbleibt der Behälterdeckel in dem Behälteraufnahmeraum, auch wenn kein Behälter in dem Behälteraufnahmeraum angeordnet ist. Dadurch werden Handhabungsprozesse gering gehalten. Ein First beschreibt zumindest einen obersten Bereich des Deckels. An den First grenzen Flächen an, die zumindest teilweise in Schwerkraftrichtung nach unten geneigt sind. Der Begriff "Frist", auch Dachfirst genannt, ist im bautechnischen, architektonischen Sinne zu verstehen und bezeichnet die meist waagerechte obere Kante eines Satteldaches oder anderer Dachformen. Bei gewölbten und runden, tonnenförmigen Dachkonstruktionen verläuft der First am Scheitelpunkt des Bogens. Bei einem Zeltdach ist der First auf einen Firstpunkt als oberster Punkt des Daches reduziert. Durch den Behälterdeckel wird von der Sprinkleranlage versprühtes Wasser zielgerichtet vom Behälter weg und Richtung Brandherd geleitet.

Vorzugsweise weist der Behälterdeckel an seinen Längs- und Querseiten jeweils eine Tropfkante auf, die seitlich über eine in Schwerkraftrichtung projizierte Fläche eines obersten Behälters des Stapels von Behältern hervorsteht. Durch die Tropfkante wird erreicht, dass Flüssigkeit nicht in das Behälterinnere des obersten Behälters gelangt.

In Weiterbildung der Erfindung sind die Tropfkanten an sich in Schwerkraftrichtung nach unten erstreckenden Seitenwänden des Behälterdeckels ausgebildet. Die Seitenwände können zur Erhöhung ihrer Steifigkeit vorzugsweise in Schwerkraftrichtung verlaufende Verstärkungsrippen aufweisen.

Vorzugsweise sind benachbarte Behälteraufnahmeräume durch Zwischenräume beabstandet, wobei die Flüssigkeitsführung über die Tropfkante in die Zwischenräume mündet. Die abgeführte Flüssigkeit gelangt in die Zwischenräume, wo sie beispielsweise an Seitenflächen der Behälter herunterläuft und somit die Seitenflächen kühlt. Weiterhin tropft die Flüssigkeit in den Zwischenräumen nach unten, wodurch ebenfalls eine Kühlung erreicht wird. Dadurch wird ein Bereich um den Brandherd gekühlt, sodass ein Ausbreiten des Brandes verlangsamt bzw. verhindert wird.

Vorzugsweise ist der Behälterdeckel durch zumindest einen Teil der Stapelgeometrie mit einem obersten Behälter eines Stapels von Behältern formschlüssig lösbar verbunden. Dadurch ist der Behälterdeckel relativ zum obersten Behälter gegen ein horizontales Verrutschen gesichert. Der Behälterdeckel kann durch eine relativ zum Behälter vorgenommene vertikale Bewegung vom Behälter getrennt werden. Dadurch wird sichergestellt, dass der Behälterdeckel in einer definierten Art und Weise auf dem Behälter angeordnet ist.

Weiterhin wird die oben genannte Aufgabe durch einen Behälterdeckel nach Anspruch 5 gelöst.

Dazu weist der Behälterdeckel wenigstens einen First auf, wobei an den First Flächen angrenzen, die zumindest teilweise in Schwerkraftrichtung nach unten geneigt sind. Entsprechend bildet der wenigstens eine First einen obersten Bereich des Behälterdeckels. Dadurch wird von oben kommendes Wasser vom First entlang der geneigten Flächen abgeführt.

Vorzugsweise ist in jedem Eckbereich des Behälterdeckels jeweils ein First in Form einer Erhöhung vorgesehen, die Teil einer Flüssigkeitsführung ist. Der Behälterdeckel hat eine im Wesentlichen rechteckige Grundfläche mit Quer- und Längsseiten. In den Ecken des Behälterdeckels sind die Eckbereiche angeordnet.

Die Eckbereiche erstrecken sich ausgehend von der Ecke in Richtung der benachbarten Ecken beispielsweise zwischen 5% und 20% der entsprechenden Längen der Quer- und Längsseiten des Behälterdeckels. Die Erhöhung ist beispielsweise keilförmig ausgebildet. Alternativ dazu kann die Erhöhung beispielsweise als Hohlkehle ausgeformt sein, deren höchster Punkt ebenfalls in der Ecke angeordnet ist.

In den Eckbereichen der Behälteraufnahmeräume sind üblicherweise Pfosten angeordnet. Diese Pfosten dienen als Führung für den Behälterstapel und sind vorzugsweise aus einem Metall, wie beispielsweise Stahl oder Aluminium, geformt. Dadurch sind die Pfosten schwerer entflammbar als Behälter, die vorzugsweise aus einem Kunststoff geformt sind. In Falle einer Aktivierung der Sprinkleranlage hat Wasser im Bereich der Pfosten einen geringeren Effekt als Wasser im Bereich der Seitenwände der Behälter des Stapels. Entsprechend kann Wasser durch die Flüssigkeitsführung aus den Eckbereichen hin zu anderen Bereichen des Behälterdeckels, beispielsweise dessen Seitenränder, geführt werden. Dort führt das versprühte Wasser zu einer guten Brandbekämpfung.

Weiterhin ist der Behälterdeckel erfindungsgemäß dazu ausgestaltet, in dem Behälteraufnahmeraum zu verbleiben, auch dann, wenn kein Behälter in dem Behälteraufnahmeraum angeordnet ist. Dazu liegt der Behälterdeckel beispielsweise auf der Halteeinrichtung auf. Dadurch entfallen weitere Handhabungsschritte, wie beispielsweise das Öffnen und Schließen, wenn auf ein Behälterinneres zugegriffen werden soll. Der erfindungsgemäße Behälterdeckel schützt einen Inhalt der obersten Behälter und führt zu einer guten Effizienz. Die darunter liegenden Behälter werden durch den Deckel und den obersten Behälter geschützt, so dass kein Wasser, Staub oder Schmutz in sie eintritt.

Vorzugsweise weist der Behälterdeckel an jeder Längs- und Querseite eine Tropfkante auf, die Teil der Flüssigkeitsführung ist. Der Behälterdeckel hat eine rechteckige Grundfläche, dessen lange Seite der Längsseite und dessen kurze Seite der Querseite entspricht. Die Tropfkanten sind außerhalb der Eckbereiche angeordnet und stellen ebenfalls einen Teil der Flüssigkeitsführung dar. Ausgehend von den Tropfkanten tropft das Wasser in Schwerkraftrichtung ab und/oder es rinnt entlang einer Außenseite des Behälters nach unten. Dadurch der Behälter bzw. der Stapel gekühlt, was ein Ausbreiten eines potenziellen Brandes verlangsamt bzw. verhindert.

Vorzugsweise gehen die Erhöhungen in Kämme über, die sich entlang einer Winkelhalbierenden zwischen einer Querseite und einer Längsseite des Behälterdeckels erstrecken. Die Winkelhalbierende schließt Winkel von plus/minus 10° zur tatsächlichen Winkelhalbierenden ein. Ein Kamm stellt eine Erhöhung dar, von der zwei nach unten geneigte Flächen ausgehen, ähnlich einem Bergkamm. Der Kamm kann symmetrisch oder asymmetrisch geformt sein. Bei einem symmetrischen Kamm sind die Neigungsprofile beider Flächen identische, während bei einem asymmetrischen Kamm unterschiedliche Neigungsprofile vorliegen. Durch die Dimensionierung der Erhöhung und der geneigten Flächen kann ein Bereich definiert werden, aus dem Wasser weggeführt werden soll. Folglich sind die Kämme und die geneigten Flächen Teil der Fluidführung. Dadurch kann der Behälterdeckel einfach an unterschiedliche Gegebenheiten, wie beispielsweise eine Pfostenform, angepasst werden.

Vorzugsweise treffen sich jeweils zwei Kämme in einem Schnittpunkt, wobei die Schnittpunkte vorzugsweise durch einen First miteinander verbunden sind. Der Behälterdeckel hat damit die Form eines Walmdachs. Bei einem rechtwinkligen Behälterdeckel treffen sich die Winkelhalbierenden von zwei Ecken einer Querseite in dem Schnittpunkt. Die beiden Schnittpunkte liegen auf einer der beiden Mittenachse des Rechtecks bzw. des Behälterdeckels, wobei die Mittenachse parallel zur Längsseite ausgerichtet ist. Ein First ist ebenfalls ein erhöhter Bereich mit zwei nach unten geneigten Flächen, die sich auf beiden Seiten des Firstes hin zu den Längsseiten erstrecken. Die geneigten Flächen des Firstes und der Kämme gehen ineinander über, sodass Wasser ausgehend von dem First und der Kämme zu der Tropfkante geleitet wird. In anderen Worten wird Wasser aus den Eckbereichen und einer Mitte des Behälterdeckels hin zu den Seiten geführt. Entsprechend sind der First und dessen geneigte Flächen Teil der Fluidführung.

Vorzugsweise sind der Behälterdeckel und die Flüssigkeitsführung einstückig ausgebildet. Dadurch kann der Behälterdeckel einfach und effizient, beispielsweise durch Thermoform- oder Spritzgussverfahren hergestellt werden.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Stapellageranordnung,
- Fig. 2: eine schematische Darstellung eines Behälters mit einer ersten Ausführungsform eines Behälterdeckels,
- Fig. 3: eine Schnittdarstellung der Fig. 2,
- Fig. 4: eine schematische Längsseitenansicht der ersten Ausführungsform eines Behälterdeckels,
- Fig. 5: eine schematische Darstellung eines Behälters mit einer zweiten Ausführungsform eines Behälterdeckels,
- Fig. 6: eine schematische Ansicht einer zweiten Ausführungsform des Behälterdeckels,
- Fig. 7: eine schematische Längsseitenansicht der zweiten Ausführungsform eines Behälterdeckels,
- Fig. 8: eine schematische Darstellung eines Behälterdeckelstapels von Behältern der zweiten Ausführungsform,
- Fig. 9: eine Schnittdarstellung der Fig. 8,
- Fig. 10: eine schematische Darstellung eines Behälters mit einer dritten Ausführungsform eines Behälterdeckels,
- Fig. 11: eine schematische Darstellung eines Behälters mit einer vierten Ausführungsform eines Behälterdeckels,
- Fig. 12: eine schematische Darstellung eines Behälters mit einer fünften Ausführungsform eines Behälterdeckels,
- Fig. 13: eine schematische Darstellung eines Behälters mit einer sechsten Ausführungsform eines Behälterdeckels.

Nachfolgend werden identische Bezugszeichen für gleiche Elemente in verschiedenen Ausführungsformen verwendet.

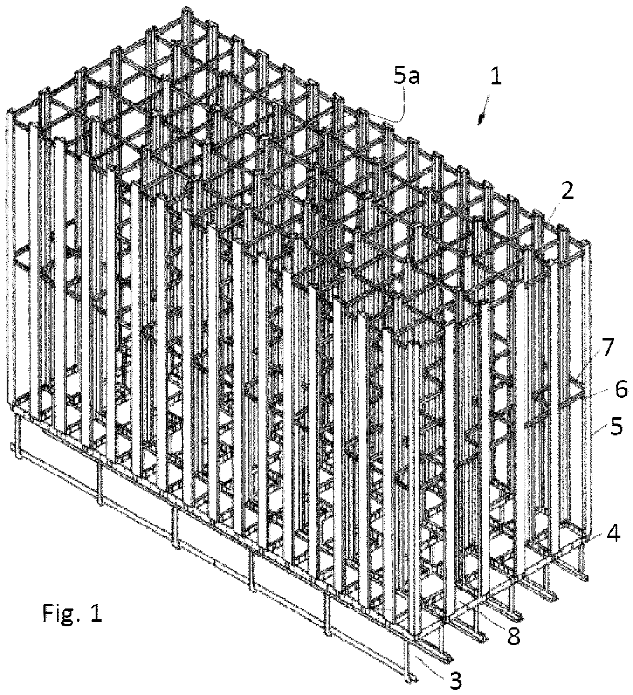

Fig. 1 zeigt sehr schematisch, ohne weitere Einzelheiten, eine Stapellageranordnung 1 mit mehreren Behälteraufnahmeräumen 2 und einem Beschickungsraum 3, der unterhalb der Behälteraufnahmeräume 2 angeordnet ist.

Zwischen den Behälteraufnahmeräumen 2 und dem Beschickungsraum ist eine Rahmenanordnung 4 angeordnet. Auf der Rahmenanordnung 4 sind Pfosten 5 angeordnet, die mit einem Abstand zur Rahmenanordnung 4 durch Querstreben 6 und Längsstreben miteinander verbunden sind. Die Rahmenanordnung 4 weist für jeden Behälteraufnahmeraum 2 eine Öffnung 8 auf, durch die der Behälteraufnahmeraum 2 mit dem Beschickungsraum 3 in Verbindung steht. Zwischen benachbarten Behälteraufnahmeräumen 2 sind Zwischenräume 5a angeordnet.

In den Behälteraufnahmeräumen 2 können in Fig. 1 nicht dargestellte Stapel von Behältern eingelagert werden, die durch nicht dargestellte Halteeinrichtungen gehalten werden. Derartige Halteeinrichtungen sind bspw. in der EP 3 782 931 A1 oder EP 3 838 802 A1 beschrieben. Auf einem obersten Behälter eines Stapels ist ein in Fig. 1 nicht dargestellter Behälterdeckel angeordnet.

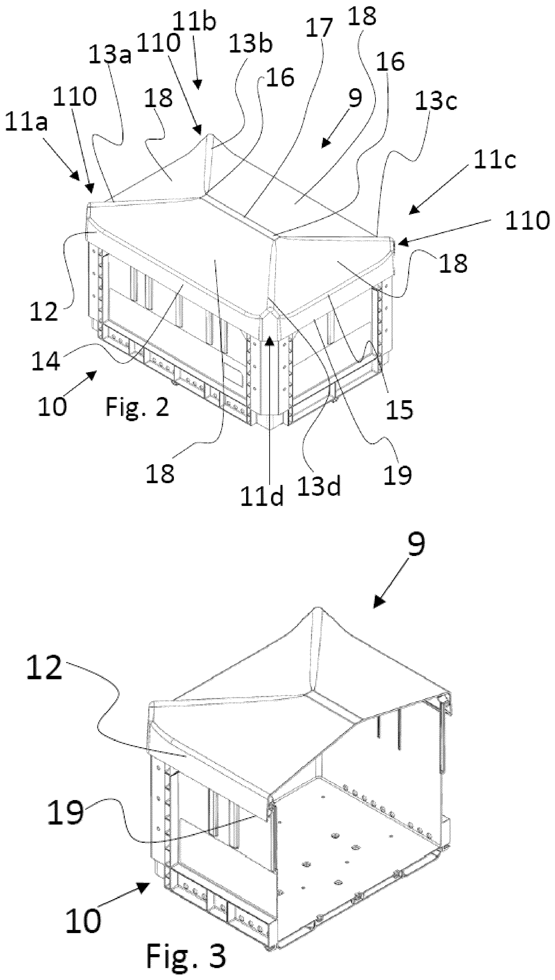

Figs. 2 - 4 zeigen eine erste Ausführungsform eines Behälterdeckels 9.

In Fig. 2 ist der Behälterdeckel 9 auf einem Behälter 10 angeordnet. Der Behälterdeckel 9 weist vier Eckbereiche 11a - 11d und eine sich in Schwerkraftrichtung erstreckenden umlaufende Seitenwand 12 auf. In jedem der Eckbereiche 11a - 11d ist eine Erhöhung 110 vorgesehen, die sich von den zugehörigen Seitenwänden 12 des Behälterdeckels im Wesentlichen symmetrisch nach oben erstreckt. Von den Erhöhungen 110 erstrecken sich entlang einer Winkelhalbierenden, die zwischen einer Längsseite 14 und einer Querseite 15 aufgespannt ist, kammförmige Erhebungen (Kämme 13a-13d). Jeweils zwei Kämme 13a, 13b / 13c, 13d treffen sich in einem Schnittpunkt 16. In den Schnittpunkten 16 gehen die Kämme 13a - 13d in einen First 17 über, der die beiden Schnittpunkte 16 miteinander verbindet. Es wird eine Art Walmdach gebildet.

Von den Kämmen 13a - 13d und dem First 17 gehen nach unten geneigte Flächen 18 aus, die zumindest teilweise in Schwerkraftrichtung geneigt sind und in die Seitenwände 12 übergehen. Unten an der Seitenwand 12 ist eine Tropfkante 19 angeordnet.

Fig. 3 zeigt eine Schnittansicht der Fig. 2. Die Seitenwand 12 des Behälterdeckels 9 ist außerhalb des Behälters 10 angeordnet, was eine formschlüssige lösbare Verbindung ermöglicht. In anderen Worten umschließt die Seitenwand 12 einen oberen Bereich, eine nicht dargestellte Öffnung, des Behälter 10. Weiterhin zeigt Fig. 3 die Tropfkante 19 an einem in Schwerkraftrichtung unten liegenden Ende der Seitenwand 12.

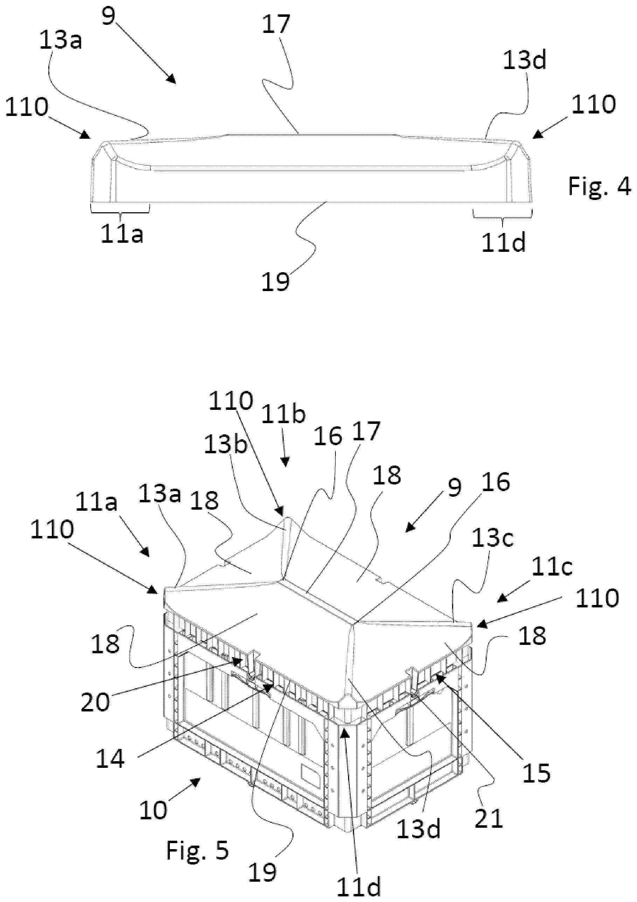

Fig. 4 zeigt eine schematische Seitenansicht der Längsseite 14 des Behälterdeckels 9. Die beiden dargestellten Eckbereiche 11a - 11d erstrecken sich jeweils entlang der Längsseite 14 und der Querseite 15 in Richtung der benachbarten Eckbereiche 11a - 11d. Im vorliegenden Ausführungsbeispiel übersteigt der First 17 eine Höhe der beiden Kämme 13a, 13d. Es ist aber auch möglich, dass die Eckbereiche 11a-11d, die Kämme 13a-13d und der First 17 im Wesentlichen dieselbe Höhe haben. Den unteren Abschluss des Behälterdeckels 9 bildet die Tropfkante 19.

In der ersten Ausführungsform bilden die Kämme 13a - 13d, der First 17, die geneigten Flächen 18, die Seitenwand 12 und die Tropfkante 19 des Behälterdeckels 9 eine Flüssigkeitsführung. Durch die Flüssigkeitsführung wird von oben kommendes Wasser, das beispielsweise durch eine Sprinkleranlage versprüht wird, von den Eckbereichen 11a - 11d und dem First 17 hin zur Tropfkante 19 des Behälterdeckels 9 geleitet.

Fig. 5 bis Fig. 9 zeigen ein zweites Ausführungsbeispiel eines erfindungsgemäßen Behälterdeckels 9.

In Fig. 5 ist der Behälterdeckel 9 auf einem Behälter 10 angeordnet. Der Behälterdeckel 9 weist eine im wesentlichen rechteckigen Grundriss mit vier Eckbereichen 11a - 11d auf. In jedem der vier Eckbereiche 11a - 11d ist zumindest ein Teil einer Erhöhung 110 angeordnet, die von den Eckbereichen 11a - -11d jeweils in einen Kamm 13a - 13d übergehen. Kämme 13a - 13d erstrecken sich entlang einer Winkelhalbierenden zwischen einer Längsseite 14 und einer Querseite 14. Die Längsseite 14 entspricht einer langen Seite des rechteckigen Grundrisses des Behälterdeckels und die Querseite 15 entspricht einer kurzen Seite. Jeweils zwei Kämme 13a - 13d treffen sich in einem Schnittpunkt 16, wo die Kämme 13a - 13d in einen First 17 übergehen. Der First 17 erstreckt entlang einer Mittelachse des Behälterdeckels 9. Ausgehend von dem First 17 und den Kämmen 13a - 13d erstecken sich geneigte Flächen 18. Die geneigten Flächen 18 münden in Tropfkanten 19, die durch Stapelgeometrien 20 unterbrochen sind.

Die Tropfkanten 19 stehen seitlich über den Grundriss des Behälters 10 über. Der Grundriss entspricht einer in Schwerkraftrichtung projizierten Fläche des Behälters 10.

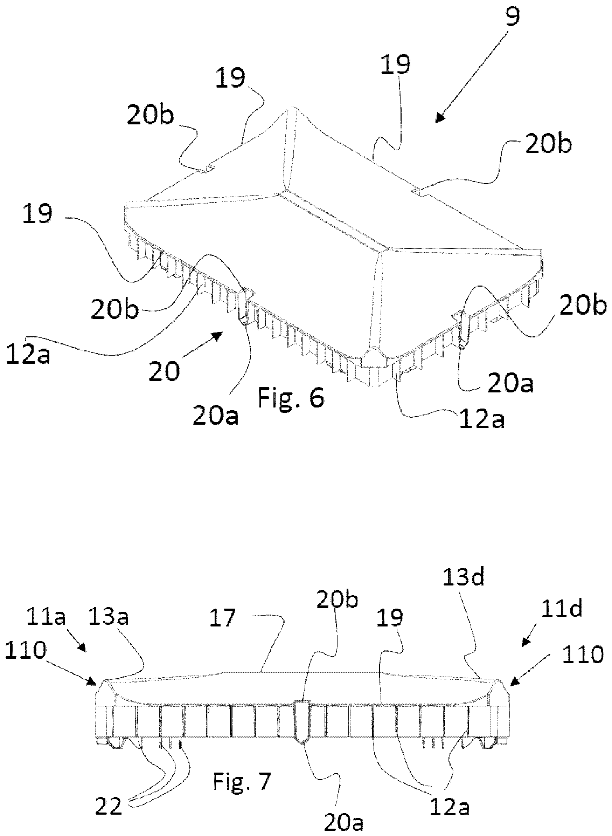

Fig. 6 zeigt den Behälterdeckel 9 und dessen Stapelgeometrien 20. Die Stapelgeometrien 20 weisen jeweils eine Nase 20a und eine Ausnehmung 20b auf. Die Nase 20a wirkt, wenn der Behälterdeckel 9 auf einem Behälter 10 angeordnet ist, mit einer Aufnahme 21 des Behälters 10 zusammen, siehe dazu Fig. 5.

Fig. 7 zeigt eine Seitenansicht einer Längsseite eines Behälterdeckels 9 des zweiten Ausführungsbeispiels. Relativ zur Tropfkante 19 übersteigt der First 17 die Kämme 13a - 13d. Auf der Unterseite des Behälterdeckels 9 sind Elemente 22 vorgesehen, die über die Stapelgeometrien 20 hinausragen. Diese Elemente 22 sind dazu ausgestaltet, mit einem Behälterinneren insbesondere mit inneren Behälterseitenwänden zusammenzuwirken und somit den Behälterdeckel 9 gegen ein Verrutschen zu sichern. An den Seitenwänden 12 des Behälterdeckels 9 sind Verstärkungsrippen 12a ausgebildet, um die Steifigkeit des Behälterdeckels 9 zu erhöhen.

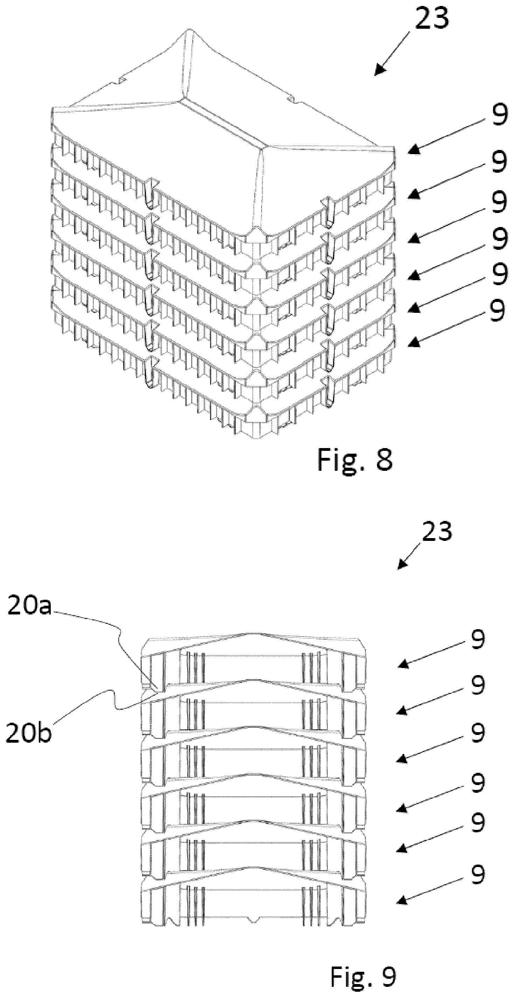

Fig. 8 und Fig. 9 zeigen einen Stapel 23 von sechs Behälterdeckeln 9. Dabei greifen die Stapelgeometrien 20 von übereinander angeordneten Behälterdeckeln 9 ineinander.

Fig. 9 zeigt, dass die Nase 20a eines ersten Behälterdeckels 9 in eine Ausnehmung 20b eines darunter liegenden zweiten Behälterdeckels 9 greift. Dies stellt eine formschlüssige lösbare Verbindung von benachbarten Behälterdeckeln 9 dar. Dabei können die Behälterdeckel 9 durch Abheben voneinander getrennt werden.

In der zweiten Ausführungsform bilden die Kämme 13a - 13d, der First 17, die geneigten Flächen 18 und die Tropfkante 19 eine Flüssigkeitsführung.

In Behälteraufnahmeräumen 2 einer Stapellageranordnung 1 werden Stapel von Behälter 10 angeordnet, wobei auf dem jeweils obersten Behälter 10 eines Stapels ein Behälterdeckel 9 vorgesehen ist. Entsprechend ist in jedem Behälteraufnahmeraum 2 genau ein erfindungsgemäßer Behälterdeckel 9 angeordnet. Der Behälterdeckel 9 verbleibt im Behälteraufnahmeraum 2, auch wenn kein Behälter in dem Behälteraufnahmeraum 2 angeordnet ist.

Um Brände frühzeitig zu bekämpfen, sind beispielsweise Sprinkleranlagen vorgesehen, die bei einem Brandfall Wasser auf entsprechende Bereiche des Stapellagers versprühen. Durch die erfindungsgemäßen Behälterdeckel 9 wird zum einen verhindert, dass der oberste Behälter 10 eines jeden Stapels gefüllt werden muss bevor Wasser zum eigentlichen Brandherd gelangt, und zum anderen wird das versprühte Wasser aus den Eckbereichen 11a - 11d hin zur Tropfkante 19 geleitet. Ausgehend von der Tropfkante 19 tropft das Wasser in die Zwischenräume 5a bzw. rinnt an Außenflächen der Behälter 10 herunter. Dadurch werden die Zwischenräume und Behälter 10 gekühlt, was im Brandfall ein Ausbreiten eines Brandes reduziert oder verhindert.

Ein weiterer vorteilhafter Effekt des Behälterdeckels 9 ist, dass ein Behälterinneres eines obersten Behälters 9 vor Staub und sonstiger Verschmutzung geschützt ist.

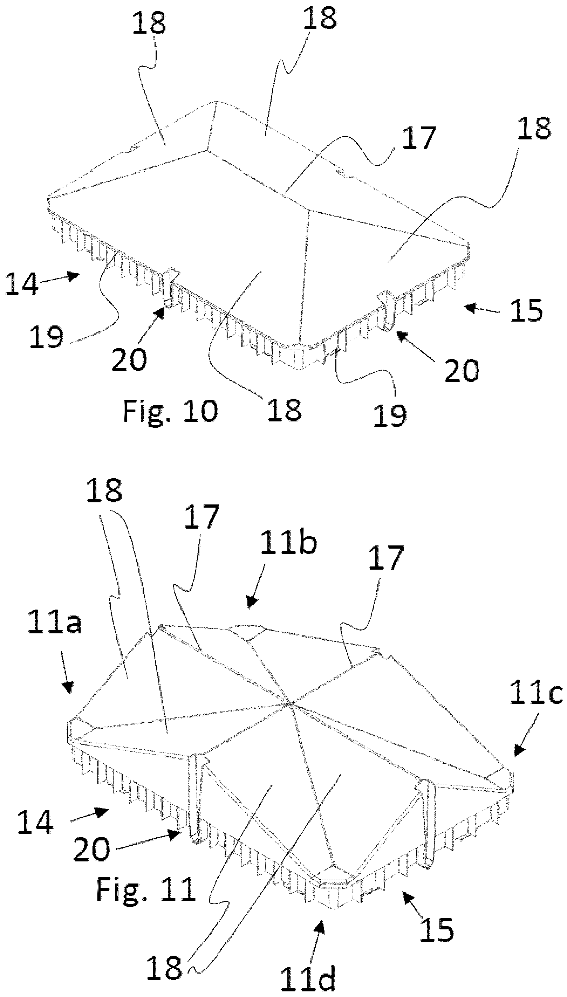

Fig. 10 bis 13 zeigen weitere Ausführungsformen eines erfindungsgemäßen Behälterdeckels. Die weiteren Ausführungsformen unterscheiden sich lediglich in der Ausgestaltung der "Dachform" von der zweiten Ausführungsform. Die verbleibenden Merkmale, die im Wesentlichen unterhalb des eigentlichen Daches bzw. der Wasserführung angeordnet sind, wie beispielsweise die Stapelgeometrien 20 und die Elemente 22, sind identisch zur zweiten Ausführungsform, Fig. 6 - 9.

Fig. 10 zeigt eine dritte Ausführungsform eines Behälterdeckels 9 mit einem Walmdach. Das Walmdach weist einen First 17 auf, der mittig, beabstandet zur Längs- und Querseite 14, 15 des Behälterdeckels 9 angeordnet ist. An den First 17 sind insgesamt vier Flächen 18 angeschlossen, wobei zwei gegenüberliegende, an den Längsseiten 14 angeordnete Flächen 18 eine Trapezform aufweisen, und Flächen 18, die in die Querfläche 15 münden, dreieckig sind. **In** diesem Ausführungsbeispiel ist der First 17 kürzer als die Längsseite 14 des Behälterdeckels 9.

Fig. 11 zeigt eine vierte Ausführungsform eines Behälterdeckels 9 mit einem Kreuzdach, auch Kreuzgiebeldach genannt. Der Behälterdeckel 9 weist einen First 17 auf, der in einer in Schwerkraftrichtung projizierten Fläche eine Kreuzform aufweist. Die freien Enden des Kreuzes sind jeweils mittig in der Längs- bzw. Querseite 14, 15 angeordnet. Ausgehend von dem kreuzförmigen First 17 erstrecken sich Flächen 18 in Schwerkraftrichtung nach unten, die von oben kommende Flüssigkeit in die Eckbereiche 11a-11d des Behälterdeckels 9 leiten. **In** dieser Ausführungsform sind alle Firste 17 auf gleicher Höhe. Alternativ dazu kann auch eine Kreuzdachform vorgesehen sein, bei der der ein Teil des Firstes 17 in Schwerkraftrichtung tiefer liegt als der verbleibende Teil des Firstes 17

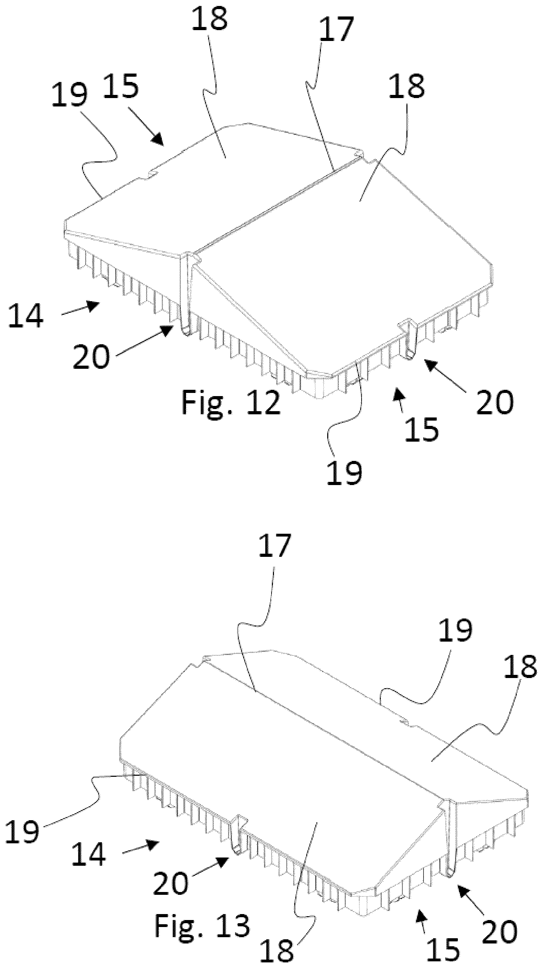

Fig. 12 und Fig. 13 zeigen eine fünfte und sechste Ausführungsform eines Behälterdeckels 9 in Form eines Satteldaches. Fig. 12 zeigt die fünfte Ausführungsform des Behälterdeckels 9, bei der sich der First 17 von einer Längsseite 14 zur gegenüberliegenden Längsseite 14 erstreckt und mittig zwischen den beiden Querseiten 15 angeordnet ist. Die vom First 17 ausgehenden Flächen 18 erstrecken sich zumindest teilweise in Schwerkraftrichtung zu den Tropfkanten 19 der jeweiligen Längsseiten 15.

Der Behälterdeckel 9 der sechsten Ausführungsform gemäß Fig. 13, weist einen First 17 auf, der sich von einer Querseite 15 zur gegenüberliegenden Querseite 15 erstreckt und mittig zwischen den beiden Längsseiten 14 angeordnet ist. Die vom First 17 ausgehenden Flächen 18 erstrecken sich zumindest teilweise in Schwerkraftrichtung zu den Tropfkanten 19 der Längsseiten 14.

## Patentansprüche

1. Stapellageranordnung (1) mit mehreren Behälteraufnahmeräumen (2), die in mehreren Reihen und Spalten angeordnet sind und zur Aufnahme von Stapeln von Behältern (10) ausgebildet sind, **dadurch gekennzeichnet, dass** in jedem Behälteraufnahmeraum (2) ein Behälterdeckel (9), insbesondere genau ein Behälterdeckel (9), angeordnet ist, wobei der Behälterdeckel (9) wenigstens einen First (17) aufweist.

2. Stapellageranordnung (1) nach Anspruch 1, wobei der Behälterdeckel (9) an seinen Längs- und Querseiten (14, 15) jeweils eine Tropfkante (19) aufweist, die seitlich über eine in Schwerkraftrichtung projizierte Fläche eines obersten Behälters (10) des Stapels von Behältern (10) hervorsteht.

3. Stapellageranordnung (1) nach Anspruch 2, wobei benachbarte Behälteraufnahmeräume (2) durch Zwischenräume (5a) beabstandet sind, wobei die Flüssigkeitsführung über die Tropfkante (19) in die Zwischenräume (5a) mündet.

4. Stapellageranordnung (1) nach einem der Ansprüche 1 bis 3, wobei der Behälterdeckel (9) durch zumindest einen Teil der Stapelgeometrie (20, 20a) mit einem obersten Behälter (10) eines Stapels von Behältern (10) vorzugsweise formschlüssig lösbar verbunden ist.

5. Behälterdeckel (9) für eine Stapellageranordnung (1) nach einem der Ansprüche 1 bis 4, **dadurch gekennzeichnet, dass** der Behälterdeckel (9) wenigstens einen First (17) aufweist, wobei an den First (17) Flächen (18) angrenzen, die zumindest teilweise in Schwerkraftrichtung nach unten geneigt sind.

6. Behälterdeckel (9) nach Anspruch 5, wobei in jedem Eckbereich (11a - 11d) des Behälterdeckels (9) jeweils ein First (17) in Form einer Erhöhung (110) vorgesehen ist, die Teil einer Flüssigkeitsführung ist.

7. Behälterdeckel (9) nach Anspruch 5 oder 6, wobei der Behälterdeckel (9) an jeder Längs- und Querseite (14, 15) eine Tropfkante (19) aufweist, die Teil der Flüssigkeitsführung ist.

8. Behälterdeckel (9) nach einem der Ansprüche 5 bis 7, wobei die Erhöhungen (110) in Kämme (13a - 13d) übergehen, die sich entlang einer Winkelhalbierenden zwischen einer Querseite (15) und einer Längsseite (14) des Behälterdeckels (9) erstrecken.

9. Behälterdeckel (9) nach Anspruch 8, wobei sich jeweils zwei Kämme (13a - 13d) in einem Schnittpunkt (16) treffen, wobei die Schnittpunkte (16) vorzugsweise durch einen First (17) miteinander verbunden sind.

10. Behälterdeckel (9) nach einem der Ansprüche 5 bis 9, wobei der Behälterdeckel (9) eine Stapelgeometrie (20, 20a, 20b) aufweist.

11. Behälterdeckel (9) nach einem der Ansprüche 5 bis 10, wobei der Behälterdeckel (9) und die Flüssigkeitsführung einstückig ausgebildet sind.
